# EUROPÄISCHE PATENTSCHRIFT

(11) **EP 1 254 983 B1**
(45) Veröffentlichungstag und Bekanntmachung des Hinweises auf die Patenterteilung: **01.09.2004**
(21) Anmeldenummer: 01110628.3
(22) Anmeldetag: 30.04.2001
(51) Int. Cl.: D06M 23/12

(54) **Verwendung von Mikrokapseln (XIV)**
Use of microcapsules (XIV)
Utilisation de microcapsules (XIV)

(43) Veröffentlichungstag der Anmeldung: 06.11.2002
(73) Patentinhaber: Cognis Iberia, S.L., 08755 Castellbisbal, (Barcelona) (ES)
(72) Erfinder: Viladot Petit, Josep-Lluis, 08018 Barcelona (ES); Tacies, Anna, Barcelona (ES)
(74) Vertreter: Fabry, Bernd, Dr.

(56) Entgegenhaltungen:
- EP-A- 1 167 618
- EP-A- 1 223 243
- EP-A- 1 247 568
- WO-A-93/24241
- WO-A-95/34609
- DE-A- 2 164 189
- ES-A- 2 112 150
- US-A- 5 089 272

## Beschreibung

### Gebiet der Erfindung

Die Erfindung befindet sich auf den Gebieten der Textilausrüstungsmittel und betrifft die Verwendung spezieller Mikrokapseln zur Herstellung von Fasern, Garnen und textilen Flächengebilden.

### Stand der Technik

Ein neuer Trend bei der Herstellung von Bekleidung geht darin, solche Materialien einzusetzen, die in der Lage sind, die beim Tragen vom menschlichen Körper abgestrahlte Wärme zu speichern und gegebenenfalls wieder abzugeben und so unabhängig vom äußeren Klima für eine konstante Körpertemperatur zu sorgen. Dieser Effekt hat insbesondere für Bekleidung, die für die kühleren Jahreszeiten oder den Wintersport gedacht ist, eine besondere Bedeutung, weil so der Auskühlung entgegenwirkt würde. Umgekehrt könnten solche Materialien auch im Fall von übergroßer Hitze von Interesse sein, wenn sie nämlich in der Lage sind, die thermische Energie in bestimmtem Umfang abzuleiten und zu speichern und so beispielsweise die jetzt bekannten feuerfesten Textilien beispielsweise auf Basis von Polybenzimidazolinfasern weiter verbessern würden.

Entsprechende Materialien sind aus dem Stand der Technik seit einigen Jahren bekannt. So wird in der Patentschrift **US 5,290,904** (Triangle) vorgeschlagen, feuerfeste Materialien herzustellen, in dem man übliche Textilien in geeigneter Weise mit sogenannten "Phase Change Materials (PCM)" beschichtet. Bei diesen PCM handelt es sich um vergleichsweise hochschmelzende Paraffinwachse mit 20 bis 50 Kohlenstoffatomen, welche als Hitzeschilde fungieren und die von außen einwirkende thermische Energie durch Änderung ihres Aggregatzustandes ableiten. Die Paraffinwachse liegen dabei in mikronisierter Form vor und weisen mittlere Durchmesser von unter 10 µm auf.

Die Eigenschaft der Speicherung von thermischer Energie durch Schmelzen entsprechender Paraffinwachse lässt sich von der Herstellung feuerfester Bekleidung auch auf solche Textilien übertragen, bei denen es eher umgekehrt darum geht, die Körperwärme zu regulieren, d.h. auf konstanter Höhe zu halten und insbesondere eine Unterkühlung zu vermeiden. Aus den Patentschriften **US 5,677,048; US 5,851,338; US 5,955,188; US 6,077,597** (Outlast) sowie der internationalen Patentanmeldung **WO 00/05970** (Frisby) sind körpertemperaturregulierende Bekleidungsstücke bekannt, welche mikronisierte Paraffinwachse in einer Schaummatrix enthalten, die ihrerseits eine isolierende Schicht zwischen dem eigentlichen textilen Flächengebilde und einem polymeren Überzug bilden.

Von Nachteil ist jedoch, dass die bekannten Systeme die thermische Energie nicht ausreichend lange speichern und im Endeffekt doch rascher abgeben als sie in der Lage sind, neue Energie wieder aufzunehmen. Dadurch wird der Effekt eines allmählichen Auskühlens zwar verzögert, aber letztendlich nicht verhindert. Die Aufgabe der vorliegenden Erfindung hat somit darin bestanden, Fasern derartig auszurüsten, dass sie - je nach Anwendungsgebietüber einen verbesserten Flammschutz verfügen oder aber thermische Energie besser zu speichern vermögen.

### Beschreibung der Erfindung

Gegenstand der Erfindung ist die Verwendung von Mikrokapseln mit mittleren Durchmessern im Bereich von 0,1 bis 5 mm, erhältlich, indem man
(a) wässrige Zubereitungen von lipophilen Wachskörpern, die ausgewählt sind aus der Gruppe, die gebildet wird von Candelillawachs, Carnaubawachs, Japanwachs, Espartograswachs, Korkwachs, Guarumawachs, Reiskeimölwachs, Zuckerrohrwachs, Ouricurywachs, Montanwachs, Bienenwachs, Schellackwachs, Walrat, Lanolin (Wollwachs), Bürzelfett, Ceresin, Ozokerit (Erdwachs), Petrolatum, Paraffinwachsen, Mikrowachsen, Montanesterwachsen, Sasolwachsen, hydrierten Jojobawachen, Polyalkylenwachsen, Polyethylenglycolwachsen sowie bei Raumtemperatur festen Fettalkoholen, Wachsestern, Fettethern und Fettketonen, in Gegenwart von Emulgatoren zu O/W-Emulsionen verarbeitet,
(b) die so erhaltenen Emulsionen mit wässrigen Lösungen anionischer Polymere behandelt,
(c) die so erhaltene Matrix mit wässrigen Chitosanlösungen in Kontakt bringt und
(d) die so erhaltenen Verkapselungsprodukte von der wässrigen Phase abtrennt,
zur Herstellung von Fasern, Garnen und textilen Flächengebilden.

Überraschenderweise wurde gefunden, dass Speicherwachse, die in einer Chitosanmatrix verkapselt vorliegen gegenüber der rein mikronisierten Form ein verbessertes Speichervermögen aufweisen. Ein weiterer Vorteil besteht darin, dass die verkapselten Wirkstoffe infolge des geringen Durchmessers der Mikrokapseln nicht nur an der Oberfläche der textilen Flächengebilden haften, sondern insbesondere auch in die Räume zwischen den Fasern eindringen und so die Wirkstoffe unmittelbar an dem Ort freisetzen können, an denen sie ihre-höchste Wirksamkeit entfalten. Die erfindungsgemäße Verwendung der Mikrokapseln führt somit gegenüber den Produkten des Stands der Technik nicht nur zu einer deutlichen Verlängerung des körpertemperaturregulierenden Effektes, sondern auch zu einer allgemeinen Steigerung der Effizienz bei der textilen Ausrüstung.

### Wachskörper

Als Wachskörper kommen sowohl natürliche als auch synthetische Wachse in Frage. Typische Beispiele für natürliche Wachse sind Candelillawachs, Carnaubawachs, Japanwachs, Espartograswachs, Korkwachs, Guarumawachs, Reiskeimölwachs, Zuckerrohrwachs, Ouricurywachs, Montanwachs, Bienenwachs, Schellackwachs, Walrat, Lanolin (Wollwachs), Bürzelfett, Ceresin, Ozokerit (Erdwachs). Beispiele für synthetische Wachse sind Petrolatum, Paraffinwachse, Mikrowachse, chemisch modifizierte Wachse (Hartwachse), wie z.B. Montanesterwachse, Sasolwachse, hydrierte Jojobawachse sowie Polyalkylenwachse und Polyethylenglycolwachse. Ebenfalls geeignet sind bei Raumtemperatur feste Fettalkohole vorzugsweise solche mit 16 bis 22 Kohlenstoffatomen, wie insbesondere Cetylalkohol, Stearylalkohol, Cetylstearylalkohol oder Behenylalkohol, Wachsester von Fettsäuren mit Fettalkoholen, welche ebenfalls bei Raumtemperatur fest sind und vorzugsweise in Summe mindestens 20, vorzugsweise mindestens 26 Kohlenstoffatome enthalten sowie vergleichbare andere Fettstoffe, wie beispielsweise Fettether (z.B. Distearylether) oder Ketone (z.B. Stearon). Es empfiehlt sich die Wachskörper oberhalb ihres jeweiligen Schmelzpunktes, also in der Regel bei 50 bis 95, vorzugsweise 60 bis 70 °C einzusetzen.

### Anionpolymere

Als anionische Polymere, die den einen Teil der Kapselhülle bilden, eignen sich neben anionischen Polysacchariden, wie z.B. Carboxymethylcellulose, oder Poly(meth)acrylsäuren und deren Derivaten, wie z.B. Salzen und Estern, vorzugsweise Salze der Alginsäure. Bei der Alginsäure handelt es sich um ein Gemisch carboxylgruppenhaltiger Polysaccharide mit folgendem idealisierten Monomerbaustein: 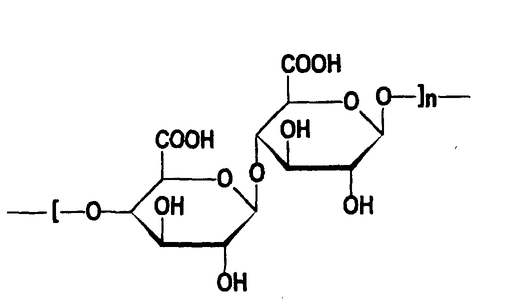 Das durchschnittliche Molekulargewicht der Alginsäuren bzw. der Alginate liegt im Bereich von 150.000 bis 250.000. Dabei sind als Salze der Alginsäure sowohl deren vollständige als auch deren partiellen Neutralisationsprodukte zu verstehen, insbesondere die Alkalisalze und hierunter vorzugsweise das Natriumalginat ("Algin") sowie die Ammonium- und Erdalkalisalze. besonders bevorzugt sind Mischalginate, wie z.B. Natrium/Magnesium- oder Natrium/Calciumalginate. In einer alternativen Ausführungsform der Erfindung kommen für diesen Zweck jedoch auch anionische Chitosanderivate, wie z.B. Carboxylierungs- und vor allem Succinylierungsprodukte in Frage, wie sie beispielsweise in der deutschen Patentschrift **DE 3713099 C2** (L'Oréal) sowie der deutschen Patentanmeldung **DE 19604180 A1** (Henkel) beschrieben werden. Ebenfalls möglich ist der Einsatz von Polyacrylaten und Polymethacrylaten. Die Einsatzmenge der Anionpolymere beträgt in der Regel - bezogen auf die Mikrokapseln - 0,01 bis 1, vorzugsweise 0,05 bis 0,1 Gew.-%.

### Chitosane

Chitosane stellen Biopolymere dar und werden zur Gruppe der Hydrokolloide gezählt. Mit den Anionpolymeren bilden sie Membranen. Chemisch betrachtet handelt es sich um partiell deacetylierte Chitine unterschiedlichen Molekulargewichtes, die den folgenden - idealisierten - Monomerbaustein enthalten:

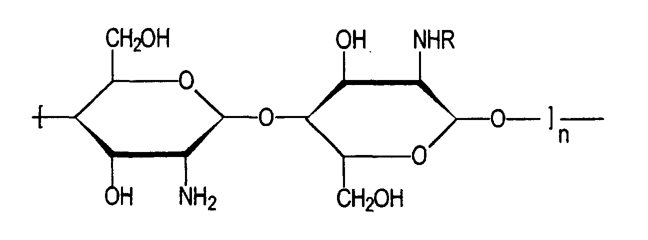

Im Gegensatz zu den meisten Hydrokolloiden, die im Bereich biologischer pH-Werte negativ geladen sind, stellen Chitosane unter diesen Bedingungen kationische Biopolymere dar. Die positiv geladenen Chitosane können mit entgegengesetzt geladenen Oberflächen in Wechselwirkung treten und werden daher in kosmetischen Haar- und Körperpflegemitteln sowie pharmazeutischen Zubereitungen eingesetzt (vgl. **Ullmann's Encyclopedia of Industrial Chemistry, 5th Ed., Vol. A6, Weinheim, Verlag Chemie, 1986, S. 231-232).** Übersichten zu diesem Thema sind auch beispielsweise von B. Gesslein et al. in **HAPPI 27, 57 (1990)**, O. Skaugrud in **Drug Cosm.Ind. 148, 24 (1991)** und E. Onsoyen et al. in **Seifen-Öle-Fette-Wachse 117, 633 (1991)** erschienen. Zur Herstellung der Chitosane geht man von Chitin, vorzugsweise den Schalenresten von Krustentieren aus, die als billige Rohstoffe in großen Mengen zur Verfügung stehen. Das Chitin wird dabei in einem Verfahren, das erstmals von Hackmann et al. beschrieben worden ist, üblicherweise zunächst durch Zusatz von Basen deproteiniert, durch Zugabe von Mineralsäuren demineralisiert und schließlich durch Zugabe von starken Basen deacetyliert, wobei die Molekulargewichte über ein breites Spektrum verteilt sein können. Entsprechende Verfahren sind beispielsweise aus **Makromol. Chem. 177, 3589 (1976)** oder der französischen Patentanmeldung **FR 2701266 A** bekannt. Vorzugsweise werden solche Typen eingesetzt, wie sie in den deutschen Patentanmeldungen **DE 4442987 A1** und **DE 19537001 A1** (Henkel) offenbart werden und die ein durchschnittliches Molekulargewicht von 10.000 bis 500.000 bzw. 800.000 bis 1.200.000 Dalton aufweisen und/oder eine Viskosität nach Brookfield (1 Gew.-%ig in Glycolsäure) unterhalb von 5000 mPas, einen Deacetylierungsgrad im Bereich von 80 bis 88 % und einem Aschegehalt von weniger als 0,3 Gew.-% besitzen. Aus Gründen der besseren Wasserlöslichkeit werden die Chitosane in der Regel in Form ihrer Salze, vorzugsweise als Glycolate eingesetzt. Die Einsatzmenge der Chitosane liegt - bezogen auf die Mikrokapseln - vorzugsweise im Bereich von 0,01 bis 1, vorzugsweise 0,05 bis 0,1 Gew.-%.

### Herstellung der Mikrokapseln

Zur Herstellung der erfindungsgemäß einzusetzenden Mikrokapseln wird zunächst eine O/W-Emulsion hergestellt, welche neben dem Wasser und dem Wachskörper eine wirksame Menge Emulgator enthält. Als Emulgatoren kommen vorzugsweise nichtionische Tenside wie beispielsweise Sorbitanester, Polysorbate oder Alkyloligoglykosiden in Frage. Zur Herstellung der Matrix wird diese Zubereitung unter starkem Rühren mit einer entsprechenden Menge einer wässrigen Anionpolymerlösung versetzt. Die Membranbildung erfolgt durch Zugabe der Chitosanlösung. Der gesamte Vorgang findet vorzugsweise im schwach sauren Bereich bei pH = 3 bis 4 statt. Falls erforderlich erfolgt die pH-Einstellung durch Zugabe von Mineralsäure. Nach der Membranbildung wird der pH-Wert auf 5 bis 6 angehoben, beispielsweise durch Zugabe von Triethanolamin oder einer anderen Base. Hierbei kommt es zu einem Anstieg der Viskosität, die durch Zugabe von weiteren Verdickungsmitteln, wie z.B. Polysacchariden, insbesondere Xanthan-Gum, Guar-Guar, Agar-Agar, Alginaten und Tylosen, Carboxymethylcellulose und Hydroxyethylcellulose, höhermolekularen Polyethylenglycolmono- und -diesten von Fettsäuren, Polyacrylaten, Polyacrylamiden und dergleichen noch unterstützt werden kann. Abschließend werden die Mikrokapseln von der wässrigen Phase beispielsweise durch Dekantieren, Filtrieren oder Zentrifugieren abgetrennt.

### Textilien

Fasern und Garne können im Sinne der vorliegenden Erfindung ausgerüstet werden, indem man die Mikrokapseln beispielsweise als Bestandteile von Spulölen oder Spinnfaserpräparationen aufbringt. In gleicher Weise können textile Flächengebilde, einschließlich entsprechender Endprodukte, durch Sprüh- oder Tauchapplikation ausgerüstet werden. In einer besonderen Ausführungsform der vorliegenden Erfindung enthalten die Mikrokapseln neben den den Wirkstoffen noch fettlösliche Farbstoffe, wie beispielsweise Beta-Carotine oder Tocopherole, die dann als Indikatoren dafür dienen können, dass die Kapseln vom Gewebe aufgenommen worden sind. Die Einsatzmenge der Kapseln kann dabei - bezogen auf das Trockengewicht-0,1 bis 1 Gew.-% betragen.

### Beispiele

**Beispiel 1.**In einer Rührapparatur wurden 0,5 g Konservierungsmittel (Phenonip®) in 50 g einer 2 Gew.-%igen wässrigen Zubereitung von Carboxymethylcellulose gelöst und die Mischung auf pH = 3,5 eingestellt. Anschließend wurde unter starkem Rühren eine Mischung bestehend aus 10 g einer 10 Gew.-%igen Candelilawachsdispersion und 0,5 g Sorbitanmonostearat+20EO (Eumulgin® SMS 20, Cognis Deutschland GmbH) hinzugegeben. Danach wurde unter weiterem Rühren eine solche Menge einer 1 Gew.-%igen Lösung von Chitosan in Glycolsäure (Hydagen® CMF Cognis Deutschland GmbH) hinzugegeben, dass sich eine Chitosankonzentration von 0,075 Gew.-% - bezogen auf die Zubereitung - einstellte. Schließlich wurde der pH-Wert durch Zugabe von Triethanolamin auf 5,5 angehoben und die entstandenen Mikrokapseln dekantiert.

**Beispiel 2.** In einer Rührapparatur wurden 0,5 g Konservierungsmittel (Phenonip®) in 50 g einer 2 Gew.-%igen wässrigen Zubereitung von Polyacrylsäure (Pemulen® TR-2) gelöst, wobei sich ein pH-Wert von 3 einstellte. Anschließend wurde unter starkem Rühren eine Mischung bestehend aus 10 g einer 10 Gew.-%igen Paraffinwachsdispersion und 0,5 g Sorbitanmonolaurat+15EO (Eumulgin® SML 15, Cognis Deutschland GmbH) hinzugegeben. Danach wurde unter weiterem Rühren eine solche Menge einer 1 Gew.-%igen Lösung von Chitosan in Glycolsäure (Hydagen® CMF Cognis Deutschland GmbH) hinzugegeben, dass sich eine Chitosankonzentration von 0,01 Gew.-% - bezogen auf die Zubereitung - einstellte. Schließlich wurde der pH-Wert durch Zugabe von Triethanolamin auf 5,5 angehoben und die entstandenen Mikrokapseln dekantiert.

## Patentansprüche

1. Verwendung von Mikrokapseln mit mittleren Durchmessern im Bereich von 0,1 bis 5 mm, dadurch erhältlich, dass man
(a) wässrige Zubereitungen von lipophilen Wachskörpern, die ausgewählt sind aus der Gruppe, die gebildet wird von Candelillawachs, Carnaubawachs, Japanwachs, Espartograswachs, Korkwachs, Guarumawachs, Reiskeimölwachs, Zuckerrohrwachs, Ouricurywachs, Montanwachs, Bienenwachs, Schellackwachs, Walrat, Lanolin (Wollwachs), Bürzelfett, Ceresin, Ozokerit (Erdwachs), Petrolatum, Paraffinwachsen, Mikrowachsen, Montanesterwachsen, Sasolwachsen, hydrierten Jojobawachen, Polyalkylenwachsen, Polyethylenglycolwachsen sowie bei Raumtemperatur festen Fettalkoholen, Wachsestern, Fettethern und Fettketonen, in Gegenwart von Emulgatoren zu O/W-Emulsionen verarbeitet,
(b) die so erhaltenen Emulsionen mit wässrigen Lösungen anionischer Polymere behandelt,
(c) die so erhaltene Matrix mit wässrigen Chitosanlösungen in Kontakt bringt und
(d) die so erhaltenen Verkapselungsprodukte von der wässrigen Phase abtrennt,
zur Herstellung von Fasern, Garnen und textilen Flächengebilden.

2. Verwendung nach Anspruch 1, **dadurch gekennzeichnet, dass** man die Mikrokapseln in Mengen von 0,1 bis 2 Gew.-% - bezogen auf das Trockengewicht - einsetzt.

## Claims

1. Use of microcapsules having average diameters in the range from 0.1 to 5 mm, obtainable by
(a) processing aqueous formulations of lipophilic wax substances selected from the group consisting of candelilla wax, carnauba wax, Japan wax, esparto grass wax, cork wax, guaruma wax, rice germ oil wax, sugarcane wax, ouricury wax, montan wax, beeswax, shellac wax, spermaceti, lanolin (wool wax), uropygeal fat, ceresin, ozokerite (earth wax), petrolatum, paraffin waxes, microwaxes, montan ester waxes, Sasol waxes, hydrogenated jojoba waxes, polyalkylene waxes, polyethylene glycol waxes and also fatty alcohols solid at room temperature, wax esters, fatty ethers and fatty ketones to O/W emulsions in the presence of emulsifiers,
(b) treating the resultant emulsions with aqueous solutions of anionic polymers,
(c) contacting the resultant matrix with aqueous chitosan solutions and
(d) separating the resultant encapulation products from the aqueous phase,
for producing fibres, yarns and fabrics.

2. Use according to Claim 1, **characterized in that** the microcapsules are used in amounts of from 0.1 to 2% by weight, based on the dry weight.

## Revendications

1. Utilisation de microcapsules de diamètres moyens dans la plage allant de 0,1 à 5 mm, pouvant être obtenues par
(a) transformation en émulsions H/E, de préparations aqueuses de corps cireux lipophiles, choisis dans le groupe constitué par la cire de candelilla, la cire de carnauba, la cire du Japon, la cire d'esparto, la cire de liège, la cire de guaruma, la cire d'huile de germes de riz, la cire de canne à sucre, la cire d'ouricoury, la cire de lignite, la cire d'abeille, la cire de gomme-laque, la cétine, la lanoline (cire de suint), la graisse de croupion, la cérésine, l'ozokérite (cire de terre), la vaseline, les cires de paraffine, les microcires, les cires d'esters de lignite, les cires de sasol, les cires de jojoba hydrogénées, les cires de polyalkylène, les cires de polyéthylèneglycol, ainsi que les alcools gras, les esters de cires, les éthers gras et les cétones grasses solides à température ambiante, en présence d'émulsifiants,
(b) traitement des émulsions ainsi obtenues par des solutions aqueuses de polymères anioniques,
(c) mise en contact de la matrice ainsi obtenue avec des solutions aqueuses de chitosane et
(d) séparation des produits d'encapsulation ainsi obtenus d'avec la phase aqueuse,
pour la fabrication de fibres, de fils et d'articles plats textiles.

2. Utilisation selon la revendication 1,
**caractérisée en ce que**
les microcapsules sont utilisées en proportions de 0,1 à 2 % en poids, par rapport au poids sec.
